Europäisches Patentamt

European Patent Office

Office européen des brevets

(11) Veröffentlichungsnummer: **0 263 110**
**B1**

# EUROPÄISCHE PATENTSCHRIFT

(45) Veröffentlichungstag der Patentschrift:
04.10.89

(21) Anmeldenummer: 86906800.7

(22) Anmeldetag: 28.06.86

(86) Internationale Anmeldenummer:
PCT/EP 86/00413

(87) Internationale Veröffentlichungsnummer:
WO 87/00360 (15.01.87 Gazette 87/01)

(51) Int. Cl.⁴: **H 02 K 7/09**, H 02 K 16/00,
F 16 C 32/04

(54) **MASCHINE MIT MAGNETGELAGERTEM ROTOR UND ELEKTRISCHER RADIALFELDMASCHINE.**

(30) Priorität: 29.06.85 DE 3523343
29.06.85 DE 3523344

(43) Veröffentlichungstag der Anmeldung:
13.04.88 Patentblatt 88/15

(45) Bekanntmachung des Hinweises auf die Patenterteilung:
04.10.89 Patentblatt 89/40

(84) Benannte Vertragsstaaten:
BE CH DE FR GB IT LI NL SE

(56) Entgegenhaltungen:
DE-A-2 500 211
DE-B-1 202 392
DE-C-853 607
FR-A-1 537 842
FR-A-2 175 126
FR-A-2 486 730
US-A-3 079 574
US-A-3 787 100
US-A-4 281 384

(73) Patentinhaber: GRIEPENTROG, Hartmut, Dohne 111,
D-4330 Mülheim/Ruhr (DE)
Patentinhaber: Weh, Herbert, Prof. Dr.,
Wöhlerstrasse 20, D-3300 Braunschweig (DE)

(72) Erfinder: GRIEPENTROG, Hartmut, Dohne 111,
D-4330 Mülheim/Ruhr (DE)
Erfinder: Weh, Herbert, Prof. Dr., Wöhlerstrasse
20, D-3300 Braunschweig (DE)

(74) Vertreter: Gralfs, Harro, Dipl.- Ing., Am
Bürgerpark 8, D-3300 Braunschweig (DE)

## Beschreibung

Die Erfindung bezieht sich auf eine rotierende Maschine mit einem Rotor mit axialer und radialer Magnetlagerung und mit einem am Rotor angeordneten Läufer einer elektrischen Radialfeldmaschine.

Rotierende Maschinen dieser Art, bei denen die Radialfeldmaschine als elektromotorischer Antrieb ausgebildet ist, sind bekannt aus der US-Patentschrift 2 436 9391 der britischen Patentschrift GB-2 022 703 A bzw. der deutschen Patentschrift DE-2 825 400 C2 und der deutschen Offenlegungsschrift 2 163 256 A. Dabei ist es bekannt, die Magnetlager so auszubilden, daß sie mit einer radialen und einer axialen Komponente gleichzeitig wirksam sind.

Magnetische Lager ermöglichen es, den Rotor reibungslos und verschleißfest zu lagern. Magnetische Lager lassen sich in geregelter oder ungeregelter Form ausführen. Es werden auch Kombinationen dieser beiden Lagertypen eingesetzt. Die geregelten Magnetlager basieren auf der Funktion geregelter Elektromagnete.

Für Querlager werden normalerweise in zwei aufeinander senkrecht stehenden Richtungen Spulen zur Erzeugung des magnetischen Feldes wirksam. Von einem den Lagerspalt messenden Sensor wird nach Vergleich mit dem Sollwert von einem Regler ein Signal auf einen den Spulenstrom bestimmenden Verstärker (Stromsteller) gegeben. Damit kann nach einer Störung der Rotorlage eine Spaltkorrektur vorgenommen und der Lauf des Rotors in der jeweiligen Achse stabilisiert werden. Ähnlich lassen sich auch axial wirkende Magnetlager aufbauen, so daß in der Kombination von magnetischen Lagern die erforderliche Kraft in den aufeinander senkrecht stehenden Hauptrichtungen (vertikal, horizontal und axial) mit Hilfe regelbarer magnetischer Felder erzeugt werden kann.

Da die magnetischen Lager konventioneller Art zur Beschränkung der Magnetisierungsleistung eisenbehaftete magnetische Kreise besitzen, ist die Obergrenze der Felddichten durch die Eisensättigung der Kreise bedingt.

Die erzeugbare Kraftdichte ist somit begrenzt; sie liegt im allgemeinen nicht über 20 N/cm². Dies wiederum bedingt verhältnismäßig großflächige Anordnungen für die Pole der magnetischen Lager. Rotoren mit großer Masse wie z. B. Schwungmassenspeicher oder Rotoren von Maschinen hoher Leistungsdichte, auf die große externe Kräfte wirken, verlangen somit im Verhältnis zu den Abmessungen der normalen Welle ein großes Lagervolumen. Die Lager selbst tragen ihrerseits nicht unbeträchtlich dazu bei, den Rotorkörper zu vergrößern.

In den meisten Anwendungsfällen wird zusätzlich eine Ein- oder Auskopplung der Leistung mit Hilfe eines elektromagnetischen Wandlers, also einer elektrischen Maschine, angestrebt. Letztere arbeitet ebenfalls berührungsfrei, läßt ein gewisses Lagerspiel zu und ermöglicht den Antrieb oder die Bremsung des Rotors ohne Zwischenschaltung von Getrieben. Elektrische Maschinen basieren ebenfalls auf der Anwendung von magnetischen Feldern, die in Wechselrichtung mit elektrischen Strömen stehen. Da ähnlich wie auch bei den normalen Magnetlagern Eisen zur Steigerung der magnetischen Leitfähigkeit verwendet wird, haben die Felder die Eigenschaft, daß von ihnen Normalkraftdichten in gleicher Größenordnung (wie bei den Lagern) erzeugt werden. Darüber hinaus besteht die Eigenschaft, daß Auslenkungen aus der Symmetrielage Kraftwirkungen hervorrufen, die tendenziell zu einer weiteren Vergrößerung des Ungleichgewichts führen. Die von einer elektrischen Maschine erzeugte Normalkraft wirkt für den Schwebezustand des Rotors destabilisierend. Durch die Maschine verursachte zusätzliche Kräfte müssen ebenfalls vom Lager aufgenommen werden.

Werden Magnetlager in der Kombination mit elektrischen Maschinen für den gleichen Rotor eingesetzt, kann es notwendig werden, daß die Querlager um beträchtliche Beträge überdimensioniert werden müssen. Damit verbunden sind in der Regel unerwünschte Vergrößerungen der gesamten Konstruktion.

Außer der beträchtlichen Massenanhäufung sind auch indirekte Folgewirkungen zu erwarten. So führt z. B. eine Verlängerung der zylindrischen Querlager bei kurzen Rotoren auch zu einer verstärkten Neigung zu Feld-Inhomogenitäten, also zu ungleichmäßiger Feldverteilung im Lager. Wird zur Beschränkung dieser Erscheinung das Lagerspiel vergrößert, so erhöht sich der Magnetisierungsbedarf der Lager, die erzielbare Kraft-Änderungsgeschwindigkeit für eine bestimmte Aussteuerung des Stromes verringert sich somit. Es sind folglich größere Aufwendungen auf der Seite der Energieversorgung und -Aufbereitung notwendig.

In der Kombination elektrische Maschine und magnetisches Lager treten also in der Regel störende Wechselwirkungen durch magnetische Felder auf, die Auswirkungen auf die Anwendbarkeit solcher Kombinationen haben können.

Es sind weiter Magnetlager bekannt, bei denen das magnetische Feld aus einer Kombination von Permanentmagnet und elektrischer Spule erzeugt wird. Es wird dann die stationäre Normalkraft mit Hilfe der Permanentmagnete und die dynamisch erforderlichen, regelbaren Feldkomponenten durch die Spulenerregung erzeugt.

Solche Lager sind dynamisch günstiger als rein elektrisch erregte Lager, da die stabilisierende Kraftkomponente mit kleinen Aussteuerungen auskommt und die Stromänderungen bei gegebener Spannung verhältnismäßig schnell sind.

Bekannt ist aus FR-A-2 175 126 eine magnetische Vorrichtung, insbesondere für ein rotatorisch angetriebenes Element, insbesondere ein Schwungrad, bei dem Antrieb und Lager zu einer Einheit integriert sind. Eine solche Vorrichtung ist sowohl in einer axialen als auch in einer tangentialen Ausführung realisierbar. Der Rotor weist im Bereich seines Umfangs Dauermagnete abwechselnder Polarität auf. Im Magnetfeld des Rotors sind auf dem Stator Wicklungen derart angeordnet, daß zum Antrieb und zur Lagerung durch Steuerung der Wicklungsströme auf den Rotor Kräfte in axialer, radialer und tangentialer Richtung ausgeübt werden. Auf dem Stator sind dabei Sensoren derart angeordnet, daß mit ihnen die Position des Rotors bezüglich seiner drei translatorischen und drei rotatorischen Freiheitsgrade erfaßbar sind. Mit den Ausgangssignalen der genannten Sensoren sind die Wicklungsströme steuerbar. Das Magnetfeld des Rotors weist hierbei zwei Bereiche auf, deren Feldlinien im wesentlichen senkrecht zueinander verlaufen. Dieses Magnetfeld wird durch senkrecht zum Luftspalt magnetisierte Dauermagnete mit in Umfangsrichtung abwechselnder Polarität erzeugt. Die Statorwicklung weist wenigstens zwei über den Umfang verteilte Leitergruppen auf, welche im wesentlichen senkrecht zu den genannten Feldlinien angeordnet sind. Von den genannten Leitergruppen ist dabei eine im wesentlichen tangential angeordnet, während die andere axial bzw. radial angeordnet ist.

Bei einer Vorrichtung der zuletzt genannten Art können je nach Ansteuerung Kräfte in den drei Richtungen und Drehmomente um die drei Raumachsen erzeugt werden. Durch Überlagerung der Wicklungsströme, insbesondere in Elektronic-Vorstufen lassen sich auch Kombinationen der genannten Bewegungen gleichzeitig durchführen. Die genannten Kräfte und Drehmomente können auch durch Oberlagerung der Felder von getrennten Wicklungen erzeugt werden, die von den Ausgangssignalen des jeweiligen Regelkreises durchflossen werden. Bei Überlagerung der Felder zur gleichzeitigen Vortriebserzeugung und Lageregelung liegt eine sehr enge Kopplung der Kräfte vor. Hierdurch wird die Regelung erschwert. Weiter ist eine solche Anordnung unbrauchbar für leistungsintensive Antriebe.

Aufgabe der Erfindung ist es, eine rotierende Maschine mit einem Rotor mit radialer und axialer Magnetlagerung zu schaffen, bei der die Magnetlagerung über den rotatorischen Antrieb bewirkt wird und eine weitgehende Entkopplung zwischen Vortriebs- und Normalkräften gegeben ist und die für Antriebe hoher Leistung geeignet ist.

Diese Aufgabe wird gemäß der Erfindung gelöst durch die Kombination der Merkmale, die in dem unabhängigen Anspruch herausgestellt sind.

Zweckmäßige Ausgestaltungen der Erfindung sind Gegenstand der Unteransprüche.

Die Erfindung ist in der Zeichnung beispielsweise veranschaulicht und im nachstehenden im einzelnen mit weiteren Merkmalen anhand der Zeichnung beschrieben. In der Zeichnung zeigen:

Fig. 1 einen schematischen Querschnitt durch eine Strömungsmaschine gemäß der Erfindung.

Fig. 2 das Lagerprinzip eines Rotors mit axial und radial wirkenden Magnetlagern.

Fig. 3 schematisch die Lagerung eines Rotors gemäß der Erfindung.

Fig. 4 in einem Teilschnitt die Lagerung eines Rotors mit einer Radialfeldmaschine und einer Axialfeldmaschine.

Fig. 5 in einem Schema die Unterteilung der Ankerwicklungen in jeweils vier Quadranten.

Fig. 6 und 7 im Diagramm die Wirkung einer Ankerfeldverschiebung gegenüber einem durch Permanentmagnete erzeugten Leerlauffeld.

Fig. 8 schematisch die Ankerfeldverschiebung.

Fig. 9 und 10 Diagramme der über die Polteilung gemittelten Kraftdichte bzw. Kraft in Umfangsrichtung.

Fig. 11 im Diagramm die Differenz der Normalkräfte.

Fig. 12 und 13 die Regelschemata für die Ankerwicklung der Axialfeld- bzw. der Radialfeldmaschine.

Fig. 14 eine weitere Ausgestaltung der Lagerung nach Fig. 4.

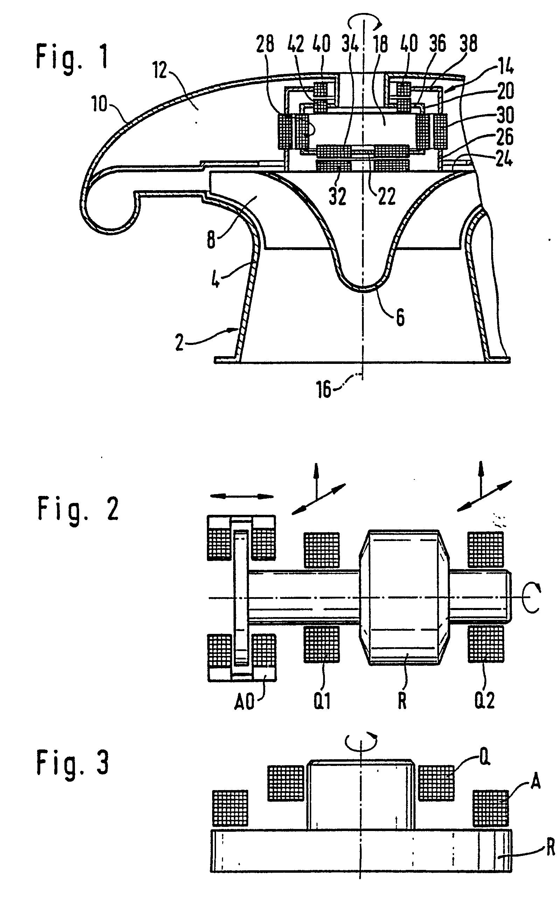

In Fig. 1 ist schematisch im Axialschnitt eine Strömungsmaschine 2 dargestellt mit einem Gehäuse 4, in dem ein Läufer 6 mit seinen Schaufeln 8 umläuft. Das Gehäuse ist mit einem druckdichten Deckel 10 versehen, durch den ein Raum 12 gebildet wird, in dem die Elemente 14 zum Antrieb und zur Lagerung des Läufers angeordnet sind.

Der Deckel 10 ist in der durch die Drehachse 16 vorgegebenen Mitte eingestülpt. Der dadurch gebildete Raum 18 weist hier eine zylindrische Wandung 20 auf und einen im wesentlichen ebenen Boden 22, der parallel zur Rückseite 24 des Läufers 6 liegt. Koaxial mit der Drehachse 16 ist weiter an der Rückseite 24 des Läufers 6 ein zylinderringförmiger Körper 26 angeordnet. Die beiden zylinderringförmigen Teile 20 und 26 bilden den Anker und den Stator einer elektrischen Innenpol-Radialfeldmaschine. Dabei sind auf der ringförmigen Wandung 20 die magnetflußführenden Teile des Stators der Radialfeldmaschine mit den Wicklungen 28 untergebracht. Am Ansatz 26 des Rotors 8 sind die korrespondierenden Magnetkreisteile 30 angeordnet. In ähnlicher Weise sind an der Rückseite des Läufers 6 Magnetkreisteile 32 des Rotors eines Axialfeldmotors angeordnet, dessen zugehörende magnetflußführende Statorteile mit den Wicklungen 34 am Boden 22 angeordnet sind.

Die zylinderringförmigen Wandungen 20 und 26 sind vom Läufer abgewandt mit einem Innenflansch 36, 38 versehen. Der Flansch 38 trägt dabei wiederum Magnetkreisteile 40 und der Flansch 36 magnetflußführende Teile mit Wicklungen 42. Diese Teile können Teile eines weiteren Axialfeldmotors sein. Sie können aber auch lediglich zur Erzeugung eines Hubfeldes vorgesehen sein, um den Läufer beispielsweise vor dem Einschalten in die Betriebsstellung zu bringen.

Die Statorwicklungen der Elektromotoren werden mit Strom variabler Frequenz gespeist, durch die ein Drehfeld erzeugt wird, das auf den Läufer das erforderliche Drehmoment überträgt. Der Radialfeldmotor und Axialfeldmotor sind weiter so ausgestaltet und gesteuert, daß die beiden Motoren gleichzeitig als magnetische Radial- bzw. Axiallager wirksam sind. Hierfür können gegebenenfalls Zusatzwicklungen bzw. Zusatzmagnete vorgesehen sein.

Bei der in Fig. 1 dargestellten Ausführungsform ist keinerlei Wellendichtung erforderlich. Darüber hinaus können alle Wicklungsanschlüsse außerhalb des Mediums liegen, in dem der Läufer arbeitet. Die mit dem Läufer verbunden Teile der Antriebe liegen dagegen im Arbeitsmedium. Gegebenenfalls kann der Raum 12 unter dem Deckel 10 auch mit einem Fremdgas gefüllt sein.

Bei mehrstufigen Maschinen sollte jede mit einem Läuferantrieb versehen sein, wie er im vorstehenden beschrieben ist. Die Läufer lassen sich dann jeweils optimal entsprechend der Verdichterkennlinie fahren.

Die dargestellte Strömungsmaschine ist als Verdichter beschrieben. Der Läufer kann aber auch als Turbinenrad ausgebildet sein, wobei die elektrischen Maschinenteile dann als Generatoren arbeiten. Der Rotor kann auch eine Schwungmasse eines Energiespeichers sein oder eine sonstwie geartete Plattform oder Scheibe.

Zur Erzeugung stabil wirkender, geregelter Normalkräfte ist die elektrische Maschine mit Stellorganen versehen und wird über Regler der Rotarlage entsprechend ausgesteuert. Dies bedeutet normalerweise auch eine Unterteilung der Maschine in mehrere am Umfang getrennt steuerbare Einheiten.

So kann ein Querlager durch eine Aufteilung der Maschinenwicklung in vier Quadranten mit getrennter Aussteuerung, jedoch in einer konstruktiven Einheit realisiert werden.

Weiter kann erforderlich werden, daß anstelle einer Maschineneinheit zwei oder gegebenenfalls drei Einheiten mit unterschiedlich wirkenden Normalkräften eingesetzt werden. Es kann somit eine Aufteilung der Maschinenleistung auf zwei oder drei Einheiten erfolgen.

Durch die Funktionsintegration von Normalkraftregelung und Tangentialkrafterzeugung in der elektrischen Maschine entsteht für die Konfiguration des Rotorkörpers und seine elektromagnetischen Statorkomponenten eine erhebliche Vereinfachung. Gleichzeitig kann in fast allen Fällen durch den Wegfall gesonderter magnetischer Lager eine günstigere Bemessung der elektrischen Maschine vorgenommen werden.

Die raum- und massesparende Anordnung des Gesamtsystems bedeutet höhere Leistungsdichte, günstigere Formgebung und in der Regel besseren Wirkungsgrad für die Energieumwandlung. Die geforderten Stelleingriffe zur Normalkraftbeeinflussung hängen von der Zahl der zu stabilisierenden bzw. zu regelnden Kraftrichtungen ab. Die Zahl der Stelleingriffe ist gleich oder größer der Zahl der Freiheitsgrade. Bei einem elektrisch anzutreibenden Rotor ist von der Gesamtzahl 6 (drei Koordinatenrichtungen + drei Drehungen) ein Rotations-Freiheitgrad durch den Antrieb belegt. Durch die Lager sind somit fünf Freiheitsgrade zu regeln. Je nach der Zahl der Lager-Motoreinheiten ist dies mit einer unterschiedlich großen Zahl von stellbaren Wicklungen bzw. Wechselrichtergruppen zu erreichen.

Die in Fig. 2 dargestellte Normalausführung besteht aus zwei Querlagern Q1 und Q2 und einem Axiallager A0, insgesamt also aus drei Motoreinheiten. Mit einer Unterteilung in vier Stellquadranten je Querlager sind jeweils zwei Regler je Querlager einzusetzen. Die vier Regler der beiden Querlager ermöglichen dann zwei (aufeinander senkrecht stehende) Hauptrichtungen und zwei Drehungen, also vier Freiheitsgrade zu regeln. Das axial wirkende Lager regelt auf einen mittleren Spalt und übernimmt die Stabilisierung des fünften Freiheitsgrades. Der entsprechende Motor muß i.a. doppelseitige Kraftwirkungen erzeugen können. Insgesamt sind $2 \times 4 + 1 = 9$ Wechselrichtereinheiten vorzusehen.

Sofern man den die Axialkraft erzeugenden Motor A auf ausreichend großem Durchmesser anordnet, können bei Unterteilung dieses Motors A in vier Wicklungsabschnitte mit vier Wechselrichtereinheiten sowohl ein mittlerer Spalt durch die Summe der Axialkräfte als auch zwei Drehungen durch jeweils gegensinnige Aussteuerung sich gegenüberliegender Quadranten geregelt werden. Mit dem Axiallager werden damit über vier Stelleinheiten drei Freiheilsgrade geregelt.

Wie Fig. 3 zeigt, genügt somit in diesem Fall ein weiteres durch eine Radialfeldmaschine Q gebildetes Querlager, mit dessen Hilfe bei vier Stellelementen die Kräfte in zwei Hauptrichtungen regelbar sind. Zwei Maschineneinheiten A und Q erlauben in dieser Konfiguration mit acht stellbaren Wicklungseinheiten die Regelung von fünf Freiheitsgraden. Neben der Minimierung der Zahl der Wechselrichtereinheiten ist die von drei auf zwei verringerte Zahl der elektrischen Maschinen ein wichtiges Merkmal für eine besonders systemgerechte Konstruktion.

Eine wichtige Rolle spielt dabei die Frage des Aufbaus bzw. der Integration der elektrischen Maschine mit dem zu lagernden Rotor R. Bei Stahlrotoren kann z. B. der magnetische Rückschluß vom Rotorkörper übernommen werden. Es entsteht somit eine enge Verbindung zwischen den Systemkomponenten. Der Rotorkörper übernimmt sowohl mechanische wie auch magnetische Funktionen. Dabei kann es erforderlich sein, die Formgebung des Rotors in geeigneter Weise zu modifizieren.

Die augenfällige Vereinfachung, die durch eine Mehrfreiheitsgrad-Regelung beim Axiallager erreicht werden kann, wird durch den Vergleich von Fig. 3 gegenüber Fig. 2 deutlich. Es wird hierbei davon Gebrauch gemacht, daß eine statische Vorbelastung durch das nach unten wirkende Rotorgewicht gegeben ist.

Für die vertikale Lagerung genügt es, in einer Richtung wirkende axiale Kräfte durch die Axialfeldmaschine A (im Sinne der nach oben wirkenden Tragkraft) zu erzeugen. Nach unten wirkende Kräfte brauchen nicht aufgebracht zu werden. Größere Axialkräfte treten bei Strömungsmaschinen auf, die allerdings abhängig von der Förderleistung und damit der Drehzahl sind. Sie wirken gleichfalls nur in eine Richtung. Somit erscheint es auch wieder möglich, die das Axiallager bildende Axialfeldmaschine, selbst bei horizontaler Welle, nur einseitig auszubilden.

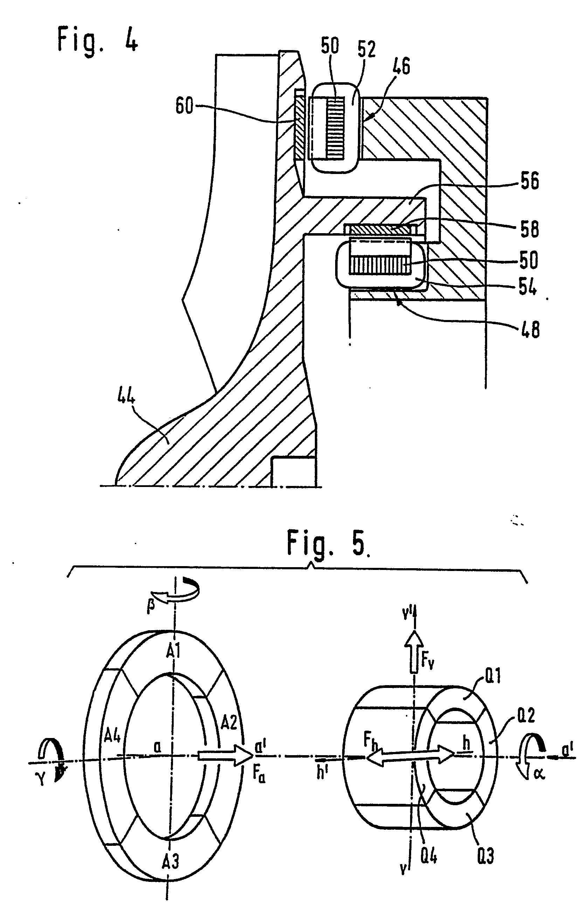

Fig. 4 zeigt den Rotor 44 einer Strömungsmaschine, der mit einer Axialfeldmaschine 46 und einer Radialfeldmaschine 48 angetrieben und gelagert ist. Das Joch 50 des Stators ist schematisch wiedergegeben. Es trägt die Statorwicklungen 52 bzw. 54, die die Ankerwicklungen sind. Diese umschließen hier als Ringspulen das Joch 50.

In einem zylinderringförmigen Ansatz 56 an der Rückseite des Rotors 44 sind auf der Innenseite Permanentmagnete 58 eingelassen, die das Leerlauffeld der Radialfeldmaschine erzeugen. In gleicher Weise sind gegenüber der Ankerwicklung 52 der Axialfeldmaschine an der Rückseite des Rotorbodens Permanentmagnete 60 eingelassen, die das Leerlauffeld der Axialfeldmaschine erzeugen.

Die für die Axialfeldmaschine und die Radialfeldmaschine gebotene Unterteilung der Ankerwicklungen in jeweils vier Quadranten ist in Fig. 5 schematisch dargestellt. Die Axialfeldmaschine und die Radialfeldmaschine erfüllen hier gleichzeitig die Funktion des Axial- bzw. Radiallagers, wie oben angegeben.

Das Leerlauffeld wird bei beiden Maschinen, wie unter Bezug auf Fig. 4 beschrieben, durch die am Rotor 44 angeordneten Permanentmagnete 58, 60 erzeugt. Der Stahlkörper des Rotors eignet sich zur Aufnahme der durch die Fliehkräfte bewirkten Umfangsspannungen; er führt gleichzeitig den magnetischen Fluß. Die Statorwicklung ist in beiden Fällen in der Form einem vielphasigen Wicklung mit Ringspulen 52, 54, die das Joch 50 umschließen, ausgeführt. Durch die Anordnung der Magnete im Ansatz 56 des Rotors und den innenliegenden Stator ist die Einleitung der Fliehkräfte der Magnete in den Rotorkörper ohne besondere Haltevorrichtung möglich.

Anstelle der Erregung durch Permanentmagnete im Stahlrotor ist auch ein passiver Rotor aus Stahl mit ausgeprägten Polen in der Form eines Reluktanzrotors in der Kombination mit einer Vielphasenwicklung anwendbar.

Es ist von Bedeutung, daß das magnetische Feld zur Normalkraftbeeinflussung in einfacher Weise verändert werden kann. Das Integral über das Quadrat der magnetischen Flußdichte bestimmt die Normalkraft, wobei bei der Radialfeldmaschine die Krümmung des Feldraumes zu berücksichtigen ist. Für die von den Statorströmen ausgehende Feldbeeinflussung ist zu beachten, daß von den Strömen sowohl die Umfangskräfte (für den Antrieb) als auch die Normalkräfte abhängen. Wie noch näher beschrieben wird, ist jedoch die Stellbarkeit des Feldes nicht ausschließlich auf Reluktanzmaschinen mit Vielphasenwicklungen beschränkt; auch bei permanenterregten Maschinen kann durch die Ankerströme eine ausreichende Stellbarkeit der Normalkräfte erzielt werden.

Es wird nun davon ausgegangen, daß die Lagerung von Rotoren durch magnetische Felder besonders für hochtourige Anwendungen von Interesse ist. Bei Maschinen mit hoher Umfangsgeschwindigkeit ergeben sich Speisefrequenzen für die Statorströme von weit mehr als 50 Hz. Es werden damit zum Betrieb von Motoren Wechselrichter benötigt, die eine Änderung der Stromrichtung (Wechselströme) in ausreichend kurzer Zeit ermöglichen. Dies erfordert, daß die Kommutierungseigenschaften der durch Schaltelemente und Wicklungsstränge gebildeten Kreise günstig sein müssen. Damit sind kurze Schaltzeiten bei den Halbleiterelementen und kleine Induktivitäten der Wicklung gefordert. Kurze Schaltzeiten beim Wechselrichter lassen sich durch die Anwendung abschaltbarer Halbleiterelemente wie Transistoren oder GTO's erreichen. Die entsprechenden zulässigen Schaltfrequenzen liegen im kHz-Bereich. Es lassen sich damit vielpolige elektrische Maschinen mit hoher Leistungsdichte betreiben. Hierdurch wird es auch möglich, die Maschinenwicklung in vier Quadranten Q1 bis Q4 zu teilen, wobei jeder Quadrant mehrere Pole umschließt. Wechselrichter mit Frequenzen oberhalb von 1 kHz weisen entsprechend der Leistungsfähigkeit der Halbleiterelemente Modulleistungen bis zu einigen 100 kW auf. Für Maschinen mit Nennleistungen um 1 Megawatt oder darüber ist somit eine Unterteilung der Wechselrichter in mehrere für sich stellbare Einheiten kein prinzipieller Nachteil.

Im Vergleich zu Antrieben mit konventionell gelagerten Rotoren und einem extern gekuppelten Motor kommt zunächst hauptsächlich der Anteil der Regelung der Teilwechselrichter zur Normalkraftbeeinflussung als zusätzlicher Aufwand hinzu. Der Umfang an Leistungselektronik-Komponenten (Bauleistung der Wechselrichter) steigt durch die Funktion der magnetischen Lager nur unwesentlich. Hiermit im Zusammenhang steht allerdings die Frage nach der Art des für die Feldbeeinflussung gewählten Stellverfahrens.

Die möglichen Stellverfahren für die Normalkräfte sind abhängig von der Art der elektrischen Maschine. Wie schon beschrieben, ist die Normalkraft in den einzelnen Maschinenquadranten proportional dem Integral über das Quadrat der magnetischen Flußdichte im Luftspalt. Die Krümmung des Feldraumes ist dabei zusätzlich zu berücksichtigen.

Für die Normalkraftbeeinflussung eignen sich folglich alle Maschinen, bei denen über die vom Wechselrichter gespeiste Statorwicklung (und deren Ströme) die Flußdichte verändert werden kann. Besonders erwünscht sind dabei solche Steuerverfahren, bei denen die Flußdichte gegenüber einem Normalwert in zwei Richtungen stellbar ist.

Damit kann z. B. bei der als Querlager wirksamen Radialfeldmaschine im Quadrant Q1 eine Vergrößerung der Normalkraft und im Quadrant Q3 eine Verkleinerung stattfinden. Die Flußdichteänderung soll außerdem sehr schnell erfolgen, so daß nur eine kurze Verzugszeit zur Wiederherstellung der Gleichgewichtslage (und eine kleine Anregelzeit) entsteht. Hierzu siehe Fig. 5.

Eine schnelle Lagekorrektur bedeutet auch, daß nur kleine Abweichungen von der Sollage entstehen. Dies wiederum ermöglicht die Einhaltung eines kleinen Lagerspalt-Nennwertes. Letzteres ist deshalb sehr erwünscht, weil die Materialausnützung bei magnetischen Lagern und elektrischen Maschinen mit abnehmendem Nennspalt steigt. Hohe Lagersteifigkeit kann bei kleinen Nennspalten leichter erreicht werden, als bei großen. Eine ausreichend hohe Lagersteifigkeit durch eine dynamisch sehr wirksame Regelung ist im Zusammenhang mit schnell rotierenden Körpern wichtig.

Die Beeinflussung der magnetischen Felddichte wird bei Reluktanzmaschinen zweckmäßig entsprechend der deutschen Offenlegungsschrift DE-OS 34 01 163 so erfolgen, daß die der Pollücke zugeordneten Spulenströme über den Spaltregelkreis vergrößert oder verkleinert werden. Hierdurch tritt im Bereich des kleinen Spaltes (Polbereich) eine annähernd dem Strom proportionale Feldänderung auf, die Ursache für die Normalkraftbeeinflussung ist. Die Veränderung der Ströme in ihrem Amplitudenwert setzt für den Wechselrichter und den Gleichstromzwischenkreis eine Spannungsreserve (Spannungshub) von entsprechender Größe voraus. Bei Anwendung von Vielphasenwicklungen ist es möglich, in entsprechenden Wicklungsbereichen einer Reluktanzmaschine eine unterschiedliche Normalkraftbeeinflussung zu erreichen. Reluktazmaschinen stellen jedoch nicht für alle Anwendungen die günstigsten Lösungen für das Antriebsproblem dar.

Sollen permanenterregte Synchronmaschinen eingesetzt werden, so ist eine Feldbeeinflussung mit Hilfe der Ankerströme zunächst als weniger naheliegend anzusehen. Die Permanentmagnete erzeugen ein von außen her nicht beeinflußbares magnetisches Feld, das als Leerlauffeld anzusehen ist. Es ist möglich, eine Verstärkung oder eine Schwächung des Feldes dadurch zu erzielen, daß die von den Ankerströmen erzeugten Feldanteile gegenüber dem Leerlauffeld (also gegenüber den Polen der P-Magnete) in Umfangsrichtung verschoben werden. Es wird bei gleicher Größe der Ankerströme nur deren relative Lage zum Rotor verändert. Für die Beeinflußbarkeit des Feldes erweist sich dabei ein im Vergleich zum Feld der Permanentmagnete nicht zu kleines Ankerfeld als günstig. Die notwendige Größe des Ankerfeldes bezogen auf die Dichte des Leerlauffeldes bestimmt die Größe des Normalkrafthubes. Eine Begrenzung des Ankerfeldes ist jedoch aus mehreren Gründen erwünscht. Ein zu großer Anteil verringert bekanntlich die erzielbare Kraftdichte in Umfangsrichtung, reduziert also die Leistungsdichte und erfordert eine verstärkte Auslegung des Wechselrichters.

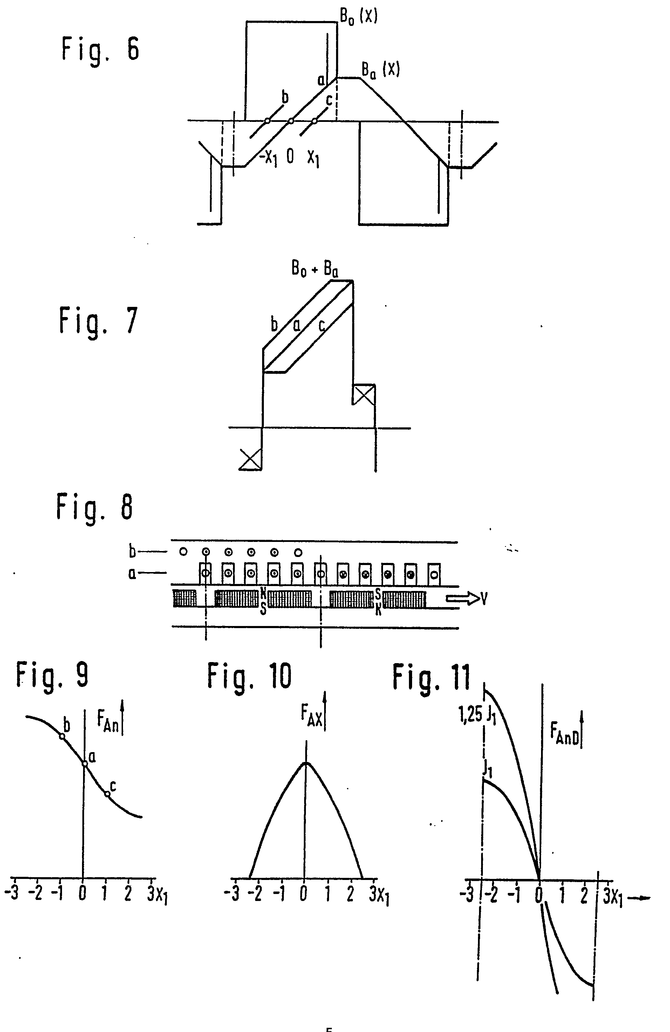

In dem in Fig. 6 wiedergegebenen Diagramm ist $B_0$ der rechteckförmig gezeichnete Verlauf des von den Permanentmagneten erzeugten (Leelauf-) Felder. Das Ankerfeld, gekennzeichnet durch $B_a$ erreicht in seinem Maximalwert weniger als die Hälfte des Leerlauffeldes. Das Ankerfeld $B_a$ wird nun verschieblich angenommen. Die Kurve a zeigt jene Stellung, bei der die zugehörigen Ankerströme die größte Umfangskraft erzeugen. In Fig. 7 ist die sich durch Überlagerung beider Feldanteile ergebende Summe $B_0$ + $B_a$ aufgetragen. Verschiebt man $B_a$ gegenüber dem Leerlauffeld, so treten Änderungen in Größe und Verteilung der resultierenden Felddichte auf.

Eine relative Verschiebung von $B_a$ nach links um $x_1 = 1/5 \, \tau$ (Kurve b), wie sie in Fig. 8 dargestellt ist, bringt eine Erhöhung der örtlichen Flußdichte unter dem Pol. Umgekehrt bringt eine Verschiebung nach rechts um den gleichen Betrag (Kurve c) eine Verringerung der Flußdichte. Da die Normalkraftdichte dem Quadrat der resultierenden B-Werte proportional ist, entstehen für die mittlere Kraftdichte deutliche Unterschiede.

In Fig. 9 ist die über die Polteilung gemittelte Kraftdichte in Abhängigkeit von der Größe der Verschiebung aufgetragen. Zunehmende Verschiebung nach links gegenüber der Ausgangslage a führt bei -2,5 $x_1$ zu einem Kraftmaximum, während bei Verschiebung nach rechts bei +2,5 $x_1$ ein Kraftminimum auftritt. Wie in Fig. 10 dargestellt, geht die von den Ankerströmen erzeugte Kraft in Umfangsrichtung von der Optimalstellung a aus zurück und erreicht bei ± 2,5 $x_1$ den Wert null.

Die Differenz der Normalkräfte bei gegensinniger Aussteuerung zeigt Fig. 11. Die beiden Kurven zeigen, daß eine verhältnismäßig kleine Stromerhöhung (von $I_1$ auf 1,25 $I_1$) starke Krafterhöhungen bewirkt.

Die für Fig. 6 angenommene Verteilung von $B_a$ in Abhängigkeit von x z. B. nach Kurve a stellt sich mit der in Fig. 8 gezeichneten Stromverteilung mit 5 Nuten (Phasen) je Pol und einer Magnetanordnung mit einer Polbreite von 4/5 $\tau$ ein. Eine Linksverschiebung um eine Nutteilung (Fall b) bedeutet, daß nun die kommuitierende Spule mit dem Strom null aus der Pollücke heraus unter den Nachbarpol wandert. Hierdurch ändern sich auch die elektrischen Verhältnisse für die Kommutierung. Die induzierte Spannung unterstützt nun die Stromänderung verstärkt.

Die Annahme gleichgroßer Ströme in den jeweils unter den Polen befindlichen Nuten setzt eine Stromregelung für die einzelnen Phasen voraus. Wird auf eine Einflußnahme auf die Stromgröße durch Zwischentakten des Wechselrichters verzichtet, so stellt sich der Spulenstrom entsprechend den wirksamen Spannungen frei ein. Dieser Betrieb ist im oberen Teil des Drehzahlbereiches, also bei hohen Frequenzen, sinnvoll. Geht man davon aus, daß der Strom bei der höchsten Flußdichte dabei den erwünschten Wert annimmt, so zeigt sich, daß die bei kleiner Flußdichte sich einstellenden Ströme größer sind. Dies führt dazu, daß der Feldanstieg von $B_a$ in Abhängigkeit von x größer und zugleich nicht linear ist. Es tritt im Vergleich zu den in Fig. 6 und 7 dargestellten Verhältnissen eine Ankerfeldverformung auf und der Einfluß der Feldänderung auf die Normalkraft wird verstärkt. Für die Umfangskräfte ergibt sich ein gegenläufiger Einfluß. Die Wirksamkeit der Aussteuerung zur Stabilisierung der Schwebefunktion ist in begrenztem Umfange durch die Betriebsweise des Wechselrichters beeinflußbar.

Die Verwendung von Permanentmagneten zur Erzeugung des Leerlauffeldes weist bekanntlich den Nachteil auf, daß nur ein Teil des Gesamtfeldes durch den Strom beeinflußbar ist. Vorteilhaft wirkt sich allerdings aus, daß bei Spaltänderungen auch nur ein verminderter Einfluß auf die Normalkraft und damit eine Reduktion der destabilisierenden Wirkung gegeben ist. Dies hängt mit dem Anteil der durch Spalt und Permanentmagnet für das Feld des Ankers dargestellten magnetischen Widerstände zusammen. Der Luftspalt bedingt nur einen kleinen Anteil des gesamten Widerstandes. So kann man davon ausgehend, daß bei einer Permanentmagnethöhe, die etwa das Fünffache des Luftspaltes beträgt, eine Spaltänderung von 10 % des Nennspaltes nur eine Feldänderung von weniger als 2 % und eine Normalkraftänderung von weniger als 4 % hervorruft. Die beschriebenen Kraftaussteuerungen, die bei nicht geändertem Spalt auftreten würden, lassen sich offenbar im Prinzip auf alle die Anwendungen übertragen, bei denen verhältnismäßig kleine Änderungen des Spaltes auftreten. Allerdings sollte die Magnethöhe in jedem Fall deutlich größer als der Spalt sein. Gleichzeitig sind Maßnahmen zu treffen, meßtechnisch genau bereits sehr kleine Spaltänderungen verzögerungsfrei zu erfassen.

Es werden hierfür Spaltsensoren angewendet, die in der Lage sind, Spaltabweichungen von etwa 1 % des Nennwertes durch ein elektrisches Signal abzubilden. Die oben angenommene gegensinnige Aussteuerung von zwei sich gegenüberliegenden Wicklungsquadranten ist sinnvoll, weil dadurch annähernd eine Verdopplung der Kraftwirkung entsteht. Es erscheint indes nicht unbedingt notwendig, daß zur Stabilisierung des Schwebevorganges diese Voraussetzung erfüllt sein muß. Sofern der Lauf eines Rotors sich ohne äußere Störungen vollzieht, genügen bei verzögerungsarmer Reaktion verhältnismäßig kleine Aussteuerungen zur Stabilisierung. Es erscheint dann ausreichend, z. B. nur die im oberen Bereich eines durch eine Radialfeldmaschine gebildeten Querlagers erzeugte Tragkraft zur dynamischen Stabilisierung heranzuziehen, während die Wicklung des unteren Quadranten nur stationär ausgesteuert wird.

Zweckmäßig ist es, das durch die Axialfeldmaschine gebildete Axiallager so auszulegen, daß unter den zeitlich vorherrschenden Bedingungen (Normalbetrieb) die Axialkraft in der Feldposition - siehe Fig. 8 - d.h. ohne eine Schwächung der Umfangskraft erzeugt wird. In diesem Betriebszustand erbringt die elektrische Maschine ihre Leistung mit den kleinsten Verlusten. Die notwendigen Aussteuerungen zur dynamischen Stabilisierung treten dann mit nur kleiner Amplitude und sehr kurzzeitig auf. Sie lassen sich durch geringfügige Winkelverschiebungen der Stromverteilung ausgleichen. Der hierdurch bedingte Leistungsabfall führt nur zu einer sehr geringfügigen Stromerhöhung für die Erzeugung der mittleren Umfangskraft.

Beim Querlager ist zur Erregung der das Rotorgewicht kompensierenden Magnetkraft hingegen eine ständige Aussteuerung der Quadranten Q1 und Q3 erforderlich. Für die Auslegung der elektrischen Maschine ist zu berücksichtigen, daß zur Ausregelung von dynamischen Effekten noch eine angemessene Vergrößerung dieser Kraft notwendig ist.

Die beschriebene Maschinenart der permanenterregten Synchronmaschine mit Ankerstromverschiebung eignet sich deshalb sehr gut zur Normalkraftbeeinflussung, weil der Vorgang der Stromverschiebung ohne nennenswerte Zeitverzögerung durchführbar ist. Besonders günstig sind die Schalteigenschaften einer in Vielphasenart ausgelegten Ankerwicklung bei dieser Maschine. Die Ankerinduktivität ist durch die Anordnung der Permanentmagnete am Luftspalt sehr gering. Eine hohe Kommutierungsgeschwindigkeit ist bei gegebener Spannungsaufschaltung im Vergleich zu anderen Maschinen gesichert. In dieser Bauform lassen sich elektrische Maschinen mit besonders hohen Frequenzen betreiben.

Für die Regelung der Antriebskraft, die die Drehung des Rotors bewirkt, wird die Größe des Stromes (Stromamplitude) herangezogen.

In den Fällen, wo das Querlager durch die stationäre Aussteuerung zur Tragkrafterzeugung stark belastet ist, kann sich empfehlen, die beiden Quadranten Q1 und Q3 von der Regelung der Antriebskraft auszunehmen.

Bei Anwendungen, die eine drehzahlabhängige Axialkraft und gleichzeitig drehzahlabhängige Aussteuerungen der Stromamplitude für die Regelung der Umfangskraft erfordern, ist die zusätzliche Anwendung eines magnetischen Hilfslagers, wie es in Fig. 1 schematisch dargestellt ist, zur vorübergehenden Erzeugung einer Axialkraft sinnvoll. Das Hilfslager kann hierbei in die Regelung des Freiheitsgrades "axiale Verschiebung" (Hauptrichtung a, a') einbezogen werden. Im Bereich der Nennlast werden die Lagerkräfte zum weitaus größten Teil bzw. vollständig durch die beiden elektrischen Maschinen A und Q erzeugt; das Hilfslager kann dann abgeschaltet oder mit nur sehr geringer Kraft betrieben werden.

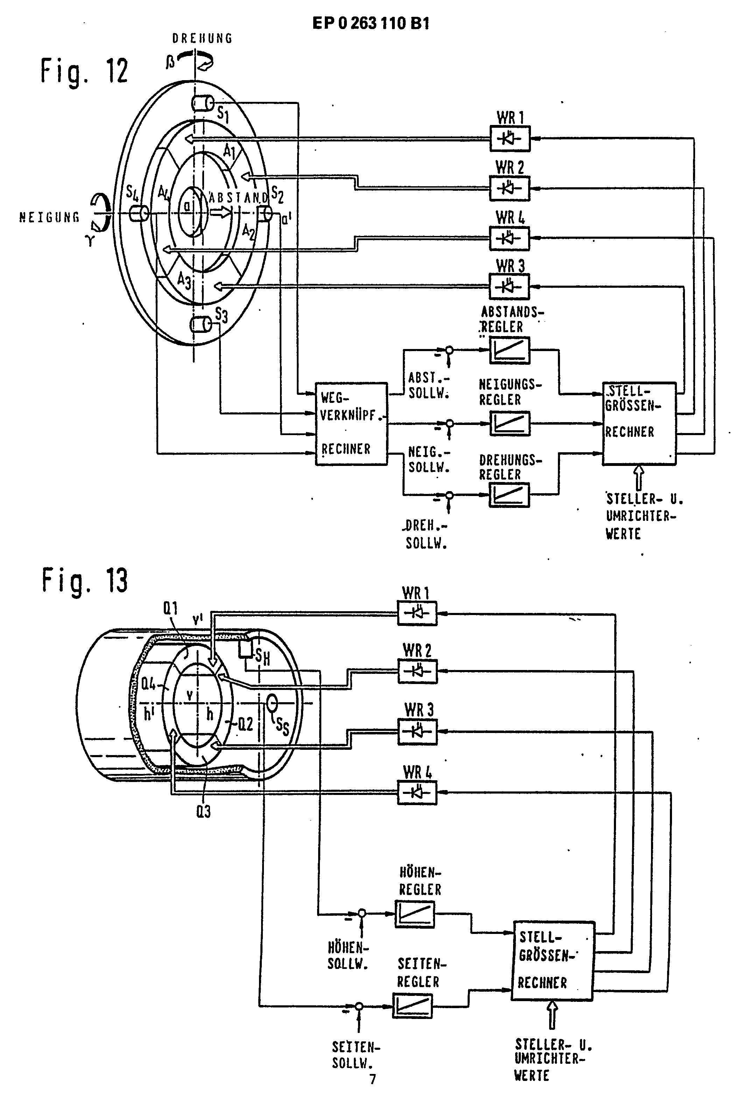

Fig. 12 zeigt das Regelschema der Ankerwicklung der Axialfeldmaschine zur Regelung der drei Freiheitsgrade für den Abstand aa' die Drehung β und die Neigung γ. Die Ist-Werte der Lage werden durch die Sensoren S1 - S4 gemessen und in einem Wegverknüpfungsrechner in die Koordinaten der Freiheitsgrade Abstand, Neigung und Drehung umgeformt.

Nach dem Sollwertvergleich entsteht in den zugehörigen PJD-Reglern für die drei Freiheitsgrade jeweils ein Reglersignal für die Lagekorrektur. Diese werden in einem Stellgrößenrechner so umgeformt, daß sie durch vier Stellglieder WR1 - WR4 zur Phasenverschiebung der Stromverteilung in den vier Wicklungsquadranten A1 - A4 der Maschine verwendet werden können.

Ein analoger Funktionsablauf für die Regelung des Querlagers zeigt Fig. 13. Es werden die beiden Freiheitsgrade für die Höhe vv' und die Seite hh' geregelt.

Zwei Sensorsignale $S_S$ und $S_H$ ermitteln die Lage-Ist-Werte. Die beiden Regler ermitteln nach Vergleich mit den Sollwerten für Höhe und Seite die Korrekturbefehle. Letztere werden in einem Stellgrößenrechner zur Verarbeitung in den vier Stellgliedern WR1 - WR4 des Querlagers umgesetzt.

Es sei betont, daß die beschriebene Regelung mit Hilfe der Phasenverschiebung der Ankerstromverteilung zwar auf relativ kleine Spaltbewegungen beschränkt ist, aber dennoch Absetz- und Anhebevorgänge des Rotors im Schwebezustand ermöglicht.

Diese Vorgänge werden durch Sollwertveränderungen nach einem vorgegebenen Verlauf von der Regelung, und damit schwebend, durchgeführt. Die Tragkraft muß bei der größten Auslenkung vom Nennspalt noch dem Rotorgewicht entsprechen.

Der Absenkvorgang steht in engem Zusammenhang zur Frage nach einem Notlager und zu dessen Spiel. Im allgemeinen kann davon ausgegangen werden, daß mechanische Notlager mit einem Spiel von rund 1 mm zur Anwendung kommen, so daß sich für die Axialfeldmaschine und die Radialfeldmaschine Lagerspalte, die geringfügig größer sind als etwa 1 mm, anbieten.

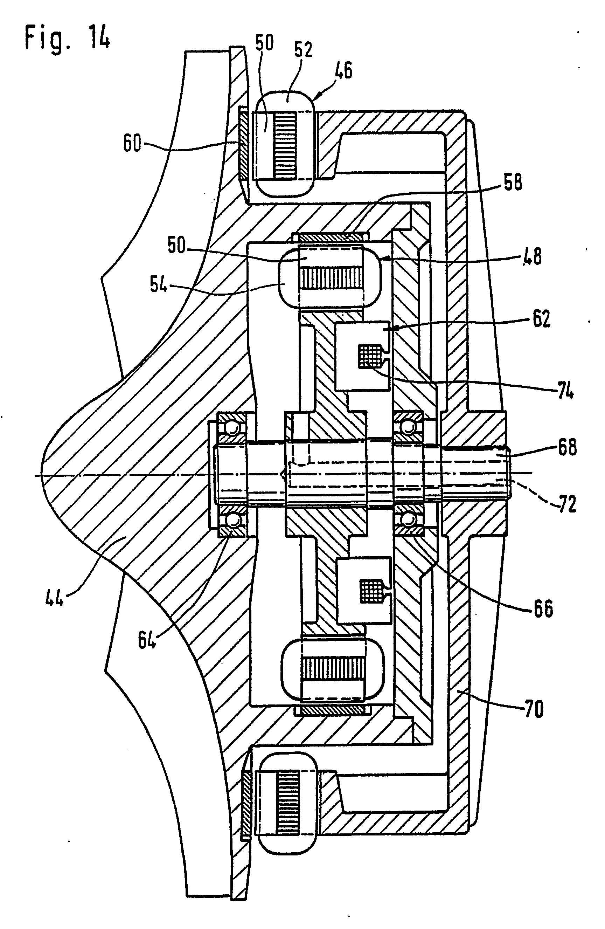

In Fig. 14 ist als Beispiel die Lagerung eines schnellaufenden Rotors mit den Hauptlagern A und Q (die elektrische Maschinen sind) dargestellt, die im Prinzip der nach Fig. 4 entspricht. Für entsprechende Teile sind daher die Bezugszeichen der Fig. 4 verwendet und insoweit wird auf die Beschreibung der Fig. 4 verwiesen. Zusätzlich ist ein magnetisches Hilfs-Axiallager 62 vorgesehen, das beim Anlauf kurzzeitig erregt wird, sowie zwei mechanische Notlager 64 und 66, mit denen der Rotor 44 auf einem feststehenden Achszapfen 68 in einem feststehenden Gehäuseteil 70 gelagert ist. Der Achszapfen 68 ist hier mit einer Bohrung 72 ausgeführt, in der die Zuleitungen zu den Ankerwicklungen 54 der Radialfeldmaschine 48 und zur Spule 74 des Hilfs-Axiallagers 62 geführt sind.

**Patentansprüche**

1. Rotierende Maschine mit einem Rotor mit axialer und radialer Magnetlagerung,
   mit einem am Rotor (44) angeordneten Läufer einer elektrischen Radialfeldmaschine (48), die zur Aufnahme der auf den Rotor wirkenden radialen Lagerkräfte ausgebildet ist,
   und mit einer Axialfeldmaschine (46), deren Läufer am Rotor (44) angeordnet ist und die zur Aufnahme der auf den Rotor wirkenden axialen Lagerkräfte ausgebildet ist,
   wobei das Feld der Axialfeldmaschine auf einem größeren Durchmesser wirksam ist als das Feld der Radialfeldmaschine, bei der die Ankerwicklungen der Radialfeld- und der Axialfeldmaschine jeweils in vier Wicklungsquadranten (A1-A4, Q1-Q4) mit eigenen Stellorganen unterteilt sind,
   wobei die Axialfeldmaschine mit drei Reglern zur Stabilisierung von drei Freiheitsgraden und die Radialfeldmaschine mit zwei Reglern zur Stabilisierung von zwei Freiheitsgraden versehen ist,
   und wobei für die Axialfeldmaschine die Meßwerte von vier Spaltsensoren (S1-S4) zur Ermittlung von drei Regelbefehlen mit Hilfe eines Verknüpfungsrechners für mittleren Spalt und zwei Drehungen dienen und diese mit Hilfe eines weiteren Rechners in Stellbefehle für vier Teil-Wechselrichter zur Phasenstellung umsetzbar sind.

2. Maschine nach Anspruch 1 dadurch gekennzeichnet, daß zur Leerlauferregung Permanentmagnete auf dem Rotor vorgesehen sind.

3. Maschine nach Anspruch 2, dadurch gekennzeichnet, daß die Normalkraftbeeinflussung durch Phasenänderung (Verschiebung) der Ankerstromverteilung gegenüber den Permanentmagneten erfolgt.

4. Maschine nach Anspruch 1 dadurch gekennzeichnet, daß die Ankerwicklungen der beiden elektrischen Maschinen vielpolig ausgeführt sind, wobei je Wicklungsquadrant mindestens zwei Pole vorhanden sind.

5. Maschine nach Anspruch 4, dadurch gekennzeichnet, daß die Ankerwicklungen mit einer Phasenzahl größer drei ausgeführt und durch Wechselrichter gespeist sind, die eine separate Strombeeinflussung der einzelnen Stränge ermöglichen.

6. Maschine nach einem der vorhergehenden Ansprüche, dadurch gekennzeichnet, daß die Spulen der Ankerwicklung als Ringspulen das Joch umschließen.

7. Maschine nach einem der vorhergehenden Ansprüche, dadurch gekennzeichnet, daß die Regelung der Antriebskraft in Abhängigkeit von der Größe des Stromes erfolgt.

8. Maschine nach einem der vorhergehenden Ansprüche, dadurch gekennzeichnet, daß zusätzlich ein magnetisch wirkendes, Axialkräfte erzeugendes Hilfslager vorgesehen ist.

## Claims

1. A rotating machine having a main rotor with axial and radial magnetic bearing arrangements, having,

disposed on the main rotor (44), an armature of an electrical radial field machine (48) which is adapted to take up the radial bearing forces acting on the main rotor,

and having an axial field machine (46), the armature of which is disposed on the main rotor (44) and which is adapted to take up the axial bearing forces acting on the main rotor,

the field of the axial field machine being effective over a larger diameter than the field of the radial field machine, wherein the armature windings of the radial field machine and of the axial field machine are each divided into four winding quadrants (A1-A4, Q1-Q4) with their own regulating units,

wherein the axial field machine is provided with three controlers to stabilize three degrees of freedom and the radial field machine is provided with two controlers to stabilize two degrees of freedom,

and wherein for the axial field machine, the measured values of four gap sensors (S1 - S4) serve to determine three control instructions with the aid of a combinatorial computer for average gap and for two rotations, and these can be converted, with the aid of a further computer, into adjusting instructions for four component inverters for the phase position.

2. A machine according to Claim 1, characterised in that permanent magnets are provided on the main rotor for the no-load excitation.

3. A machine according to claim 2, characterised in that the influencing of the normal force is effected by phase change (displacement) of the armature current distribution in relation to the permanent magnets.

4. A machine according to Claim 1, characterised in that the armature windings of the two electrical machines are made multipolar, at least two poles being present for each winding quadrant.

5. A machine according to Claim 4, characterised in that the armature windings are made with a number of phases greater than three and are fed by inverters which render possible a separate influencing of the current of the individual phase windings.

6. A machine according to any one of the preceding Claims, characterised in that the coils of the armature winding surround the yoke in the form of toroidal coils.

7. A machine according to any one of the preceding Claims, characterised in that the regulation of the driving force is effected depending on the magnitude of the current.

8. A machine according to any one of the preceding Claims, characterised in that a magnetically acting auxiliary bearing producing axial forces is additionally provided.

## Revendications

1. Machine rotative comportant un rotor à sustentation magnétique axial et radial,

comportant placé contre le rotor (44) un induit d'une machine électrique à champ radial (48), laquelle est constituée pour recevoir les forces radiales de palier agissant sur le rotor,

et comportant une machine à champ axial (46), dont l'induit est placé contre le rotor (44), laquelle est constituée pour recevoir les forces axiales de palier agissant sur le rotor,

le champ de la machine à champ axial agissant sur un diamètre plus grand que celui de la machine à champ radial, machine rotative pour laquelle les enroulements d'induits de la machine à champ radial et de la machine à champ axial sont respectivement subdivisés en quatre quadrants de bobinage (A1-A4, Q1-Q4) comportant leurs propres organes de réglage,

la machine à champ axial étant pourvue de trois régulateurs pour la stabilisation de trois degrés de liberté et la machine à champ radial de deux régulateurs pour la stabilisation de deux degrés de liberté,

et, s'agissant de la machine à champ axial, les valeurs mesurées par quatre détecteurs d'entrefer (S1 - S4) servant à l'élaboration de trois signaux d'action à l'aide d'un ordinateur de liaison pour un entrefer moyen et deux rotations, ces signaux étant transformables à l'aide d'un autre ordinateur en ordre de réglage pour quatre onduleurs sectoriels en vue du réglage des phases.

2. Machine selon la revendication 1, caractérisée en ce que des aimants permanents sont prévus sur le rotor pour l'excitation en circuit ouvert.

3. Machine selon le revendication 2, caractérisée en ce que l'influence sur la force normale se produit par modification des phases (déplacement) de la répartition du courant d'induit vis-à-vis des aimants permanents.

4. Machine selon la revendication 1, caractérisée en ce que les enroulements d'induits des deux machines électriques sont multipolaires, avec au moins deux pôles pour chaque quadrant de bobinage.

5. Machine selon la revendication 4, caractérisée en ce que les enroulements sont configurés avec un nombre de phases supérieur à trois et sont alimentés par des onduleurs, qui permettent d'influer séparément sur le courant des écheveaux pris isolément.

6. Machine selon l'une des revendications précédentes, caractérisée en ce que les bobines de l'enroulement d'induit sont des bobines circulaires qui entourent la culasse.

7. Machine selon l'une des revendications précédentes, caractérisée en ce que le réglage de la force motrice a lieu en fonction de la grandeur du courant.

8. Machine selon l'une des revendications précédentes, caractérisée en ce qu'un palier auxiliaire à action magnétique générant des forces axiales est prévu en complément.

Fig. 1

28 42 40 34 18 40 36 38

12

10

14
20
30
26
24

8

4

32 22

2

6

16

Fig. 2

C

A0      Q1      R      Q2

Fig. 3

Q

A

R

1

# Fig. 4

50  52  46

60

56

58

50

54

48

44

# Fig. 5.

β

v'

F_v

A1

A2

Q1

Q2

A4  a  a'
F_a

F_h  h

h'

γ  α  a'

A3

v  Q4  Q3

Fig. 6

$B_0 (X)$

$B_a (X)$

a
b
c

$-X_1$ 0 $X_1$

Fig. 7

$B_0 + B_a$

b a c

Fig. 8

b
a

N
S

S
K

V

Fig. 9

b

$F_{An}$

a

c

-3 -2 -1 0 1 2 3$X_1$

Fig. 10

$F_{AX}$

-3 -2 -1 0 1 2 3$X_1$

Fig. 11

1,25 $J_1$

$J_1$

$F_{AnD}$

-3 -2 -1 0 1 2 3$X_1$

## Fig. 12

DREHUNG
ß
NEIGUNG
γ
S1
A1
S4  A4  a  ABSTAND  S2  a'
A2
A3
S3

WR 1
WR 2
WR 4
WR 3

ABSTANDS-REGLER
NEIGUNGS-REGLER
DREHUNGS-REGLER

WEG-VERKNÜPF.-RECHNER

ABST.-SOLLW.
NEIG.-SOLLW.
DREH.-SOLLW.

STELL-GRÖSSEN-RECHNER

STELLER- U. UMRICHTER-WERTE

## Fig. 13

Q1  v'
SH
Q4
h'  v  h  Q2
SS
Q3

WR 1
WR 2
WR 3
WR 4

HÖHEN-REGLER
SEITEN-REGLER

HÖHEN-SOLLW.
SEITEN-SOLLW.

STELL-GRÖSSEN-RECHNER

STELLER- U. UMRICHTER-WERTE

7

Fig. 14